Europäisches Patentamt

European Patent Office

Office européen des brevets

(11) Publication number: **0 298 724**
**A2**

# EUROPEAN PATENT APPLICATION

(21) Application number: **88306159.0**

(22) Date of filing: **06.07.88**

(51) Int. Cl.⁴: **G06F 3/12**

(30) Priority: **06.07.87 JP 168448/87**

(43) Date of publication of application:
**11.01.89 Bulletin 89/02**

(84) Designated Contracting States:
**DE FR GB NL**

(71) Applicant: **BROTHER KOGYO KABUSHIKI KAISHA**
**35, Horita-dori 9-chome Mizuho-ku**
**Nagoya-shi, Aichi 467(JP)**

(72) Inventor: **Okamoto, Yuji c/o Brother Kogyo Kabushiki Kaisha**
**No. 35, Horitadori 9-chome Mizuho-ku**
**Nagoya-shi Aichi-ken(JP)**

(74) Representative: **Senior, Alan Murray et al**
**J.A. KEMP & CO 14 South Square Gray's Inn**
**London WC1R 5EU(GB)**

(54) Interface for a printer selectively operable in serial and parallel modes.

(57) An interface for use in a printing apparatus of the type in which printing is carried out in accordance with data fed from a host computer. The interface is selectively operable in one of serial mode and parallel mode. When the interface is set to the parallel mode, the printer is placed in a condition capable of receiving parallel printing data from the host computer whereas when the interface is set to the serial mode, status data of the printer as set in the printer side can be transmitted from the printer to the host computer, whereby the host computer can recognize the current status of the printer.

FIG.1

EP 0 298 724 A2

# INTERFACE FOR A PRINTER SELECTIVELY OPERABLE IN SERIAL AND PARALLEL MODES

The present invention relates to an interface for connecting a printer to a host computer, and more particularly to such an interface selectively operable in serial and parallel modes.

In a conventional printer of the type in which printing is carried out in accordance with data fed from a host computer, either a parallel-interface or a serial-interface has been used for receiving data from the host computer. The parallel-interface is such that it receives the data in parallel form whereas the serial-interface is such that it receives the data in serial form. When the parallel-interface is used, except for control signals such as $\overline{ACK}$, BUSY, PE, SLCT, LD, OR $\overline{FAULT}$ signals, data can only be transmitted from the host computer to the printer.

Recently, printers have been provided with a number of functions some of which can originate from the printer side. For example, instructions relating to typeface, impinging strength of a print hammer, ribbon font pattern produced by a dot-matrix printer, thickness of paper, length of one page, character pitch, interline pitches, etc. can be given from printer side by means of DIP (dual in-line package) switches provided in the printer. However, the printer cannot be operated efficiently unless such data are transmitted to the host computer.

According to the present invention there is provided an interface for a printer which carries out printing in accordance with data received through said interface from a computer wherein said interface and said computer are connected with a predetermined number of signal lines, said interface comprising:

a mode setting means for selectively setting said interface to either a parallel mode or a serial mode;

a clock generating means for generating a clock signal; and

a data outputting means for clocking serial data out onto one of said predetermined number of signal lines in response to said clock signal when said serial mode is set by said mode setting means.

Thus with the invention it is possible for data to be transmitted not only from the host computer to the printer but also from the printer to the host computer.

In operation, the interface of the invention may be used as a parallel-interface when printing is being carried out while receiving printing data from the host computer. With the mode setting means, the operational mode can be interchanged between parallel and serial modes. When the printer is being activated under the serial mode, the interface is changed to the parallel mode in response to a command fed from the host computer or by means of a switching means provided in the printing apparatus.

When the interface is set to the serial mode, serial data is outputted in synchronization with the clock signal on one of the output signal lines and transmitted from the printing apparatus to the host computer. Upon receipt of the thus transmitted serial data, the host computer recognizes current status of the printer.

The invention also provides a method of transmitting data through a parallel interface comprising the steps of:

providing a signal on one of the signal lines of the interface to indicate the transmission of serial data;

providing a clock signal on another of the signal lines of the interface; and

transmitting data serially on a further one of the signal lines of the interface in timed relation to the clock signal.

The invention will be further described by way of non-limitative example with reference to the accompanying drawings, in which:

Fig. 1 is a block diagram showing an arrangement of a printer connected to an input/output interface according to one embodiment of the present invention;

Fig. 2 is a diagram indicating relationship between terminal numbers assigned to the input/output interface and the names of the signals;

Fig. 3 is a timing chart of data received from a host computer and various control signals for description of data reception in parallel mode:

Figs. 4, 5 and 6 are flowcharts showing processing sequences performed by a CPU provided in the printer;

Fig. 7 is a timing chart for description of data transmission in serial mode; and

Fig. 8 is a timing chart for description of data reception in serial mode.

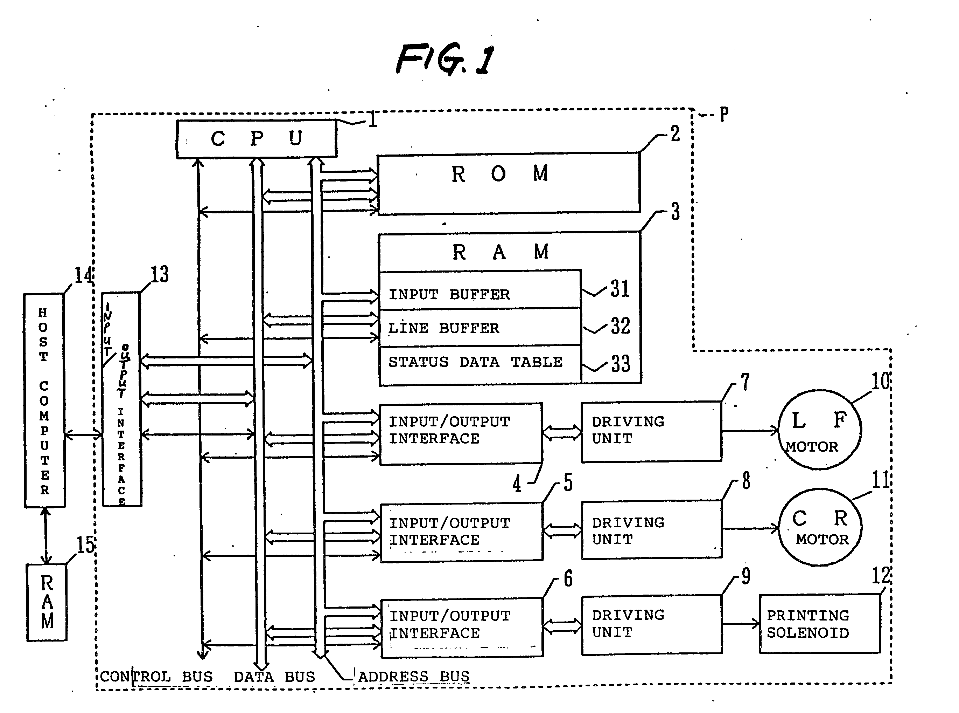

In Fig. 1, a central processing unit (CPU) 1 constituting a control unit of a printer P is connected to a host computer 14 through an input/output interface 13, and receives printing data from the host computer 14. To the CPU 1, each of ROM 2, RAM 3, and input/output interfaces 4, 5 and 6 is connected through an address bus, a data bus, and a control bus. Print control programs including various kinds of function processing routines, font patterns, etc. are stored in ROM 2. In RAM there are provided an input buffer 31 for temporarily storing an input data, a line buffer 32 for composing character patterns for one line, and a status data table 33 storing data indicative of status of the printer which have been preset or are set by a DIP switch (not shown) provided in the printer. Driving units 7, 8 and 9 are connected to the input/output interfaces 4, 5 and 6, respectively. To the driving units 7, 8 and 9, an LF motor 10 for paper feeding, a CR motor 11 for moving a carriage mounting thereon a printing head, and printing solenoids 12 for driving inpact wires are connected, respectively, all of which are driven by CPU 1 in accordance with dot patterns formed in the line buffer 32 and a function processing program corresponding to a command inputted from the host computer 14. To the host computer 14, RAM 15 is further connected, in which stored are data received from the printer P or data for transmitting to the printer P.

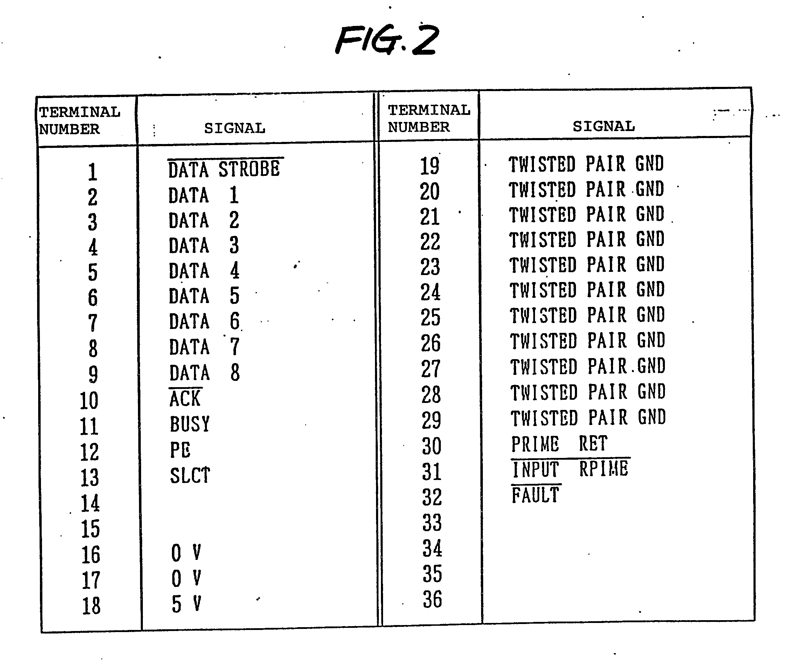

Fig. 2 is a diagram identifying signals on consecutively numbered terminals of the input/output interface 13. The input/output interface 13 has been set to the parallel mode when the printer has been powered-up or reset. Signals outputted to the printer P from the host computer 14 includes data signals DATA 1 through DATA 8 for outputting 8-bit data, a DATA STROBE signal which imparts a timing for reading the 8-bit data signal in the printer P, an INPUT PRIME signal for initializing the status of the printer, etc. Signals outputted to the host computer 14 from the printer P includes an acknowledgement (ACK) signal, a busy (BUSY) singal, a page end (PE) signal, a select (SLCT) signal, a fault (FAULT) signal, etc.

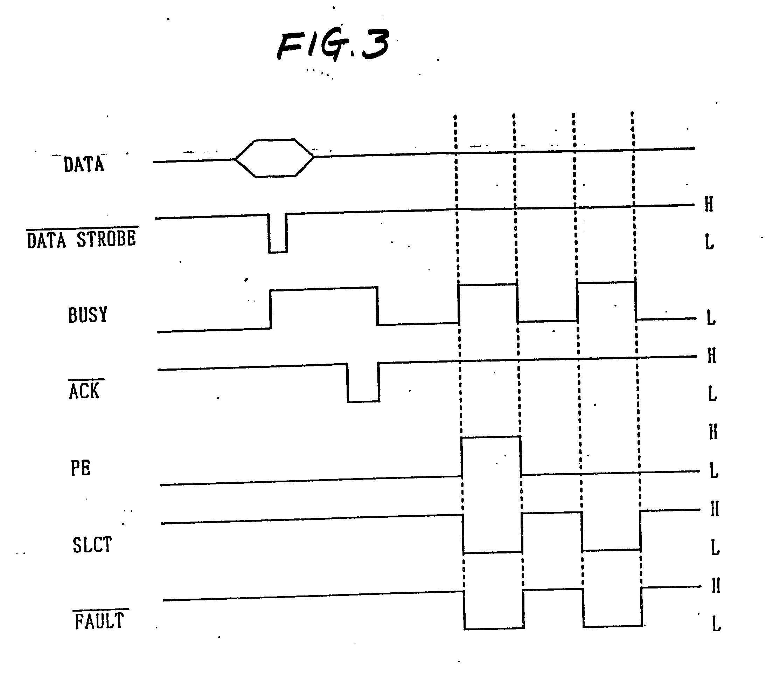

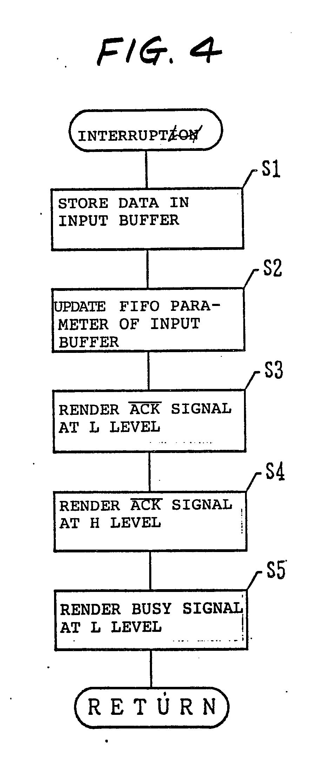

Specific meanings awarded to the signals outputted from the printer P are determined depending upon the format of the printer P. For example, as shown in Fig. 3, when the 8-bit data of DATA 1 through DATA 8 to the input/output interface 13 together with the DATA STROBE signal, the 8-bit data of DATA 1 through DATA 8 is latched in the input/output interface 13 in synchronization with the DATA STROBE signal, and the BUSY signal is raised to a high (H) level, whereupon the host computer 14 is informed that the input/output interface 13 is in a buffer full state. When the data is latched in the input/output interface 13 an interrupt signal is generated from the input/output interface 13 and is applied to CPU 1. Upon receipt of the interrupt signal in CPU 1, CPU 1 executes the data input program as shown in Fig. 4. In step 1, the input data which has been latched in the input/output interface 13 is written into the input buffer 31 which is of FIFO (First In First Out) arrangement. In step 2, FIFO parameters, such as programming address, reading address, etc. of the input buffer 31 are updated and the reading of the data is terminated. Upon completion of the reading of the data, a low (L) level ACK signal is outputted

in step 3 and in step 4, the ACK signal is raised to a H level. Consequently, a negative pulse ACK signal is outputted. In step 5, the BUSY signal is rendered at the L level and the input/output interface 13 is put in the buffer empty state, thereby allowing the subsequent data to be received from the host computer 14.

H levels of both the BUSY signal and the PE signal indicate the paper end, and H level of the BUSY signal and L levels of both the FAULT signal and the SLCT signal indicate cover open, ribbon end and deselect states.

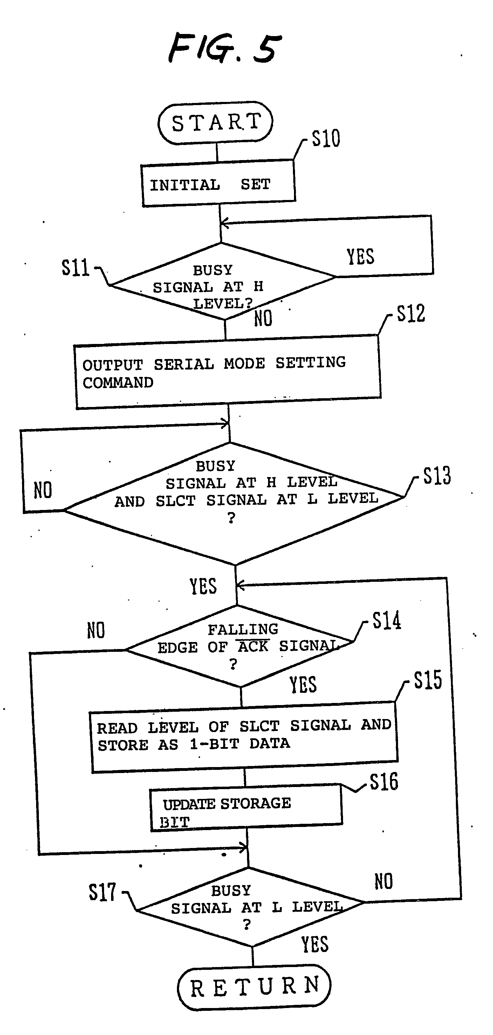

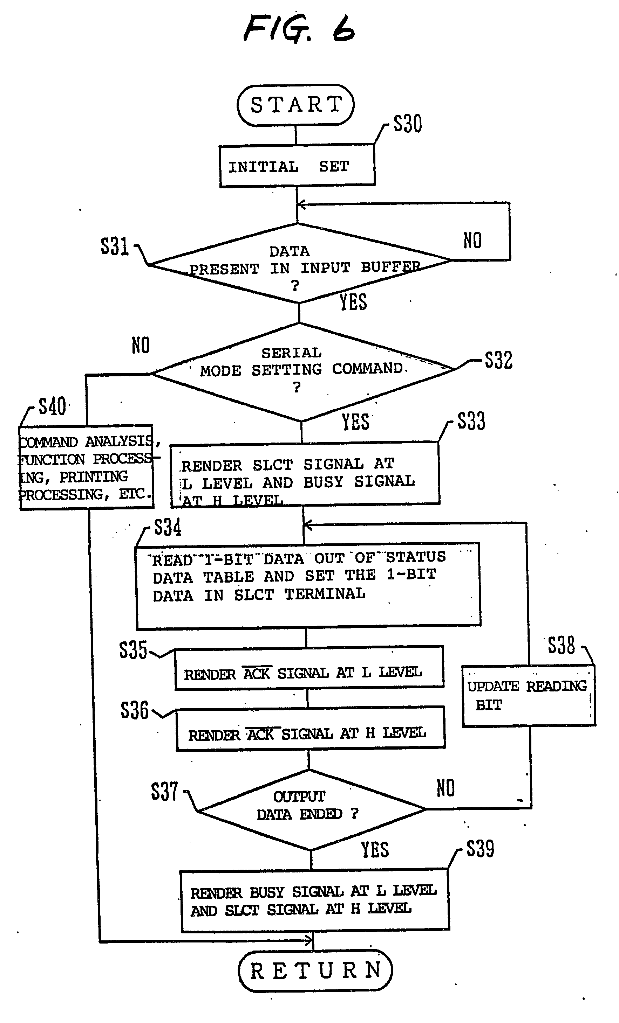

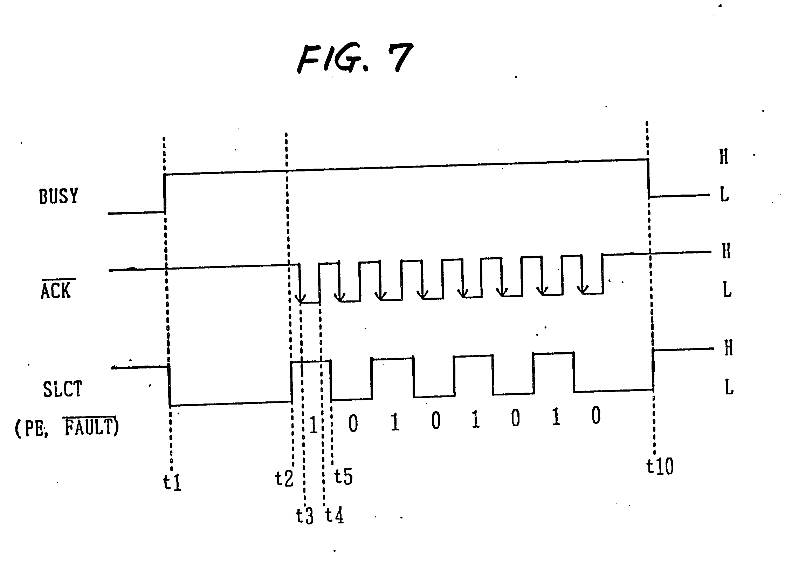

Next, operation in the case where the input/output interface 13 is used in the serial mode will be described with reference to the flowchart of Fig. 5 showing the processing sequences of the host computer 14, the flowchart in Fig. 6 showing the processing sequences of the CPU 1 in the printer P, and the timing charts in Fig. 7 showing timings of signals outputted from the printer P.

The serial mode may be set in response to a command outputted from the host computer 14. In the case where the input/output interface 13 is to receive data from the printer P with the latter set to the serial mode, the program shown in Fig. 5 is executed.

Referring to the flowchart of Fig. 5, the input/output interface 13 is set to the serial mode in step 10, and the appropriate initialization settings are carried out in step 10 to set up the interface for receiving serial data from the printer P. In step 11, the host waits for the busy signal from the printer to go low. The BUSY signal going low indicates that the printer P is capable of receiving parallel data. Then, at step 12, a serial mode setting command is outputted to the input/output interface 13.

When the input/output interface 13 receives data (in this case - the serial mode setting command), the BUSY signal is raised to the H level, and an interrupt signal is applied to CPU 1. According to the program shown in Fig. 4, the serial mode setting command is stored in the input buffer 31.

The program shown in Fig. 6 is implemented for CPU 1 of the printer P when it is powered-up. In step 30 shown in Fig. 6, initial settings of parameters necessary for determining the print format are carried out, such as origin indexing of a carriage, clear of the input buffer 31, amount of interline space, character pitch, etc. In step 31, it is judged whether or not data is presented in the input buffer 31, and the judgement in step 31 is repeatedly carried out until the data is inputted to the input buffer 31. When it is judged that the data is present in the input buffer 31, the processing proceeds to step 31 where it is judged whether or not the data being inputted to the input buffer 31 is the serial mode setting command.

When the result of the judgement in step 32 is affirmative (yes), the processing proceeds to step 33 where as occurred at time instant t1 in Fig. 7, the SLCT signal is rendered at L level and the BUSY signal is rendered at H level. Under the condition that these signals are at such levels, it is meant that the serial data can be outputted from the printer P in the serial mode. For outputting the serial data the ACK signal is used to give a clock signal and the host computer 14 reads the serial data on the SLCT signal in timed relation with the clock signal. Thus, in step 34, one bit of the data fed from the status data table 33 is read out, and in conformity with "0" or "1" of the one bit data, the SLCT signal of either L level or H level is outputted at the time instant t2. In step 35, the ACK signal is rendered at L level and in step 36, the ACK signal is rendered at H level. Specifically, due to the first processing in step 35, the ACK signal falls to L level at the time instant t3 and due to the first processing in step 36, the ACK signal is raised to H level at the time instant t4.

Next, in step 37, it is judged whether or not the data in the status data table 33 is ended. If it is not the data end, the processing proceeds to step 38 where the read out address (bit) of the status data table 33 is updated. And, the processing returns to step 34 where the subsequent one bit data is outputted as the SLCT signal. In step 35, the ACK signal is rendered at L level and in step 36, the ACK signal is rendered at H level. That is, the steps from 34 to 38 are repeatedly carried out until the data is found to be the output data end in step 37 and the serial data is outputted as the SLCT signal. The ACK signal is thus rectangular waveform such that L level and H level are sequentially repeated and the level of the SLCT signal is determined in synchronization with the falling edge of the ACK signal.

In step 37, when the data is judged to be the end of the serial data and the processing proceeds to step 39, the BUSY signal is rendered at L level and the SLCT signal is rendered at H level at the time instant t10 shown in the timing chart of Fig. 7. As a result, the input/output interface 13 returns to the parallel mode.

When in step 32, the data inputted to the input buffer 31 is not the serial mode setting command, the processing proceeds to step 40 where analysis of the command being received, function processings in accordance with the command, the print processings, etc. are executed.

After outputting the serial mode setting command in step 12 of Fig. 5, the host computer 14 receives the serial data transmitted from the printer P as shown in the timing chart of Fig. 7.

Referring back to Fig. 5, judgement is made in step 13 as to whether or not the BUSY signal is at H level and the SLCT signal is at L level. When the BUSY signal is at the H level and the SLCT signal is at L level, the processing proceeds to step 14. That is, the state that the BUSY signal is at the H level and the SLCT signal is at L level indicates that the interface 13 is set to the serial mode in response to the serial mode setting command by the processing of CPU 1 of the printer P. This occures at the time instant t1 in the timing chart of Fig. 7.

After elapsing a predetermined preparation period of time from the time instant t1, the serial data on the SLCT signal is outputted from the printer P and the ACK signal serving as the clock signal is outputted therefrom. In step 14, judgement is made as to whether or not the ACK signal has a falling edge, and when the ACK signal is judged as having the falling edge, the processsding proceeds to step 15 where the level of the SLCT signal is read. Depending upon H level or L level of the SLCT signal, one bit data of either "1" or "0" is stored in a prescribed bit storing region of RAM 15. In step 16, the stored bit is updated. In step 17, it is judged whether or not the BUSY signal is at L level. The result that the BUSY signal is not at the L level indicates the serial mode is being continued, whereupon the procedure returns to step 14 where the level of the SLCT signal is read in synchronization with the falling edge of the ACK signal. Procedure for storing the serial data is repeatedly carried out until the BUSY signal is found to be at L level in step 17. Specifically, the fact that the BUSY signal becomes at the L level indicates that the serial mode has ended and that the mode has changed to the parallel mode.

When the ACK signal does not have the falling edge in step 14, the judgement carried out in step 14 is repeated through the judgement in step 17. When the falling edge of the ACK signal is detected during the serial mode, the serial data on the SLCT signal is read into the host computer 14 upon carrying out steps 15 and 16.

As described above, according to the present embodiment, the input/output interface 13 is set to the serial made in response to a command fed from the host computer 14, and is again set to the parallel interface mode when the transmission of the serial data from the printer P is completed.

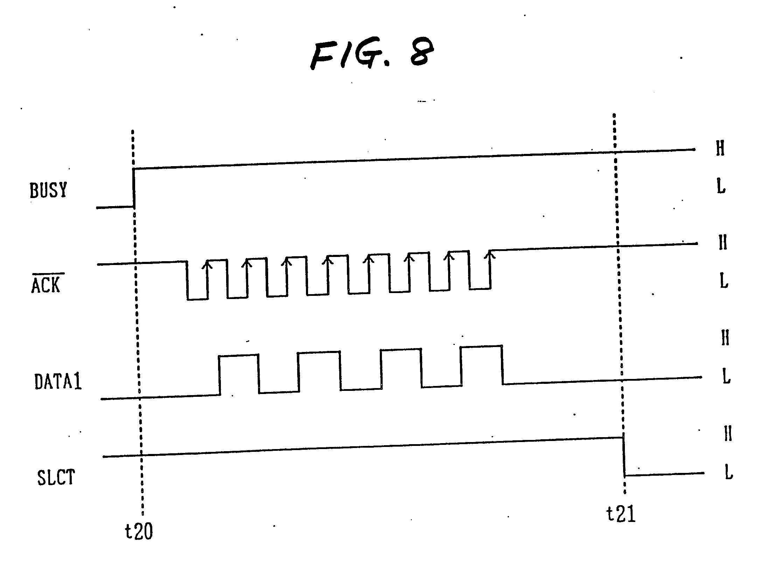

Further, as shown in Fig. 8, it is possible to transmit the serial data to the printer P from the host computer 14 in the serial mode. Specifically, by setting the input/output interface 13 to the serial mode while using the DIP switch provided in the printer P, both the BUSY signal and the SLCT signal are raised to H levels. At this time, the input/output interface 13 is placed in the serial data reception mode. When the input/output interface 13 is set to the serial data reception mode, CPU 1 of the printer P causes both the BUSY signal and the SLCT signal to H levels at the time instant t20, and after expiration of a predetermined preparation period of time, the $\overline{ACK}$ signal in the rectangular waveform is outputted. The host computer 14 outputs to the printer P a data of either "0" or "1" as the L level or H level DATA 1 signal, and the CPU 1 of the printer P samples the logical level of the DATA 1 signal in synchronization with the rising edge of the $\overline{ACK}$ signal. Further, the host computer 14 outputs the subsequent data as the DATA1 signal after expiration of a brief period of time after the rising edge of the $\overline{ACK}$ signal. In this manner, a serial data is outputted from the host computer 14 to the printer P and the printer P is capable of receiving the serial data.

Moreover, when the printer P is requested by the host computer 14 to transmit the serial data according to the command by way of the serial data, the CPU 1 of the printer P causes the SLCT signal to the L level, whereby transmission of the serial data can be performed in the same manner as described above.

In this manner, when the BUSY signal is at the H level, the input/output interface 13 is in the serial mode, and the reception mode can be attained by rendering the SLCT signal at H level whereas the transmission mode can be attained by rendering the SLCT signal at L level.

Furthermore, although it has been described that the $\overline{ACK}$ signal in the rectangular waveform is outputted from the printer P as the clock signal for sampling the SLCT signal, a clock signal generation means may be provided in the host computer 14 so that the clock signal generated therefrom is synchronized with the output frequency of the serial data.

As described, according to the present invention, data can be transmitted from the printer to the host computer, so that the host computer is capable of being informed of the various kinds of status data which have been set in the printer and thus a versatile function printer can be efficiently used.

## Claims

1. An interface (13) for a printer (P) which carries out printing in accordance with data received through said interface (13) from a computer (14), wherein said interface (13) and said computer (14) are connected with a predetermined number of signal lines, said interface comprising:

a mode setting means for selectively setting said interface (13) to either a parallel mode or a serial mode;

a clock generating means for generating a clock signal; and

a data outputting means for clocking serial data out onto one of said predetermined number of signal lines in response to said clock signal when said serial mode is set by said mode setting means.

2. An interface (13) for a printer (P) as recited in Claim 1, wherein said mode setting means sets the mode of the interface in response to a command from said computer (14).

3. An interface (13) for a printer (P) as recited in Claim 1 or 2, further comprising a clock outputting means provided in another one of said predetermined number of signal lines when the serial mode is set by said mode setting means.

4. An interface for a printer (P) as recited in Claim 1, 2 or 3 further comprising a control signal outputting means for outputting a control signal, said control signal controlling data output from said printer (P) and data input to said printer (P) when said serial mode is set by said mode setting means.

5. An interface (13) for a printer (P) as recited in Claim 1, 2 or 3 wherein when the interface (13) is in said parallel mode, said mode setting means can set said interface (13) in said serial mode in response to a command received from said computer (14), and wherein said mode setting means comprises a control signal outputting means for outputting a control signal which renders said interface (13) in said parallel mode after said serial data has been output.

6. An interface for a printer as recited in any one of the preceding claims, wherein said mode setting means comprises a switch provided in said printer (P).

7. A method of transmitting data through a parallel interface comprising the steps of:

providing a signal on one of the signal lines of the interface to indicate the transmission of serial data;

providing a clock signal on another of the signal lines of the interface; and

transmitting data serially on a further one of the signal lines of the interface in timed relation to the clock signal.

8. A method of transmitting data according to claim 7 wherein the signal lines are not the data lines used for parallel data transmission.

9. An interface adapted to operate in accordance with the method of claim 7 or 8.

10. A printer including an interface according to any one of claims 1 to 6 or 9.

# FIG.1

EP 0 298 724 A2

## FIG. 2

| TERMINAL NUMBER | SIGNAL | TERMINAL NUMBER | SIGNAL |
|---|---|---|---|
| 1 | $\overline{\text{DATA STROBE}}$ | 19 | TWISTED PAIR GND |
| 2 | DATA 1 | 20 | TWISTED PAIR GND |
| 3 | DATA 2 | 21 | TWISTED PAIR GND |
| 4 | DATA 3 | 22 | TWISTED PAIR GND |
| 5 | DATA 4 | 23 | TWISTED PAIR GND |
| 6 | DATA 5 | 24 | TWISTED PAIR GND |
| 7 | DATA 6 | 25 | TWISTED PAIR GND |
| 8 | DATA 7 | 26 | TWISTED PAIR GND |
| 9 | DATA 8 | 27 | TWISTED PAIR GND |
| 10 | $\overline{\text{ACK}}$ | 28 | TWISTED PAIR GND |
| 11 | BUSY | 29 | TWISTED PAIR GND |
| 12 | PE | 30 | PRIME RET |
| 13 | SLCT | 31 | $\overline{\text{INPUT RPIME}}$ |
| 14 | | 32 | $\overline{\text{FAULT}}$ |
| 15 | | 33 | |
| 16 | 0 V | 34 | |
| 17 | 0 V | 35 | |
| 18 | 5 V | 36 | |

EP 0 298 724 A2

# FIG.3

| Signal | | |
|---|---|---|
| DATA | | |
| $\overline{\text{DATA STROBE}}$ | H | L |
| BUSY | | L |
| $\overline{\text{ACK}}$ | H | L |
| PE | H | L |
| SLCT | H | L |
| $\overline{\text{FAULT}}$ | H | L |

EP 0 298 724 A2

# FIG. 4

```
        ( INTERRUPTION )
               │
               │          ┌─ S1
    ┌──────────────────────┐
    │ STORE DATA IN        │
    │ INPUT BUFFER         │
    └──────────────────────┘
               │          ┌─ S2
    ┌──────────────────────┐
    │ UPDATE FIFO PARA-    │
    │ METER OF INPUT       │
    │ BUFFER               │
    └──────────────────────┘
               │          ┌─ S3
    ┌──────────────────────┐
    │ RENDER ACK SIGNAL    │
    │ AT L LEVEL           │
    └──────────────────────┘
               │          ┌─ S4
    ┌──────────────────────┐
    │ RENDER ACK SIGNAL    │
    │ AT H LEVEL           │
    └──────────────────────┘
               │          ┌─ S5
    ┌──────────────────────┐
    │ RENDER BUSY SIGNAL   │
    │ AT L LEVEL           │
    └──────────────────────┘
               │
        (  R E T U R N  )
```

EP 0 298 724 A2

# FIG. 5

START

INITIAL SET — S10

S11 — BUSY SIGNAL AT H LEVEL? — YES

NO

OUTPUT SERIAL MODE SETTING COMMAND — S12

BUSY SIGNAL AT H LEVEL AND SLCT SIGNAL AT L LEVEL ? — S13

NO

YES

FALLING EDGE OF $\overline{ACK}$ SIGNAL ? — S14

NO

YES

READ LEVEL OF SLCT SIGNAL AND STORE AS 1-BIT DATA — S15

UPDATE STORAGE BIT — S16

BUSY SIGNAL AT L LEVEL ? — S17

NO

YES

RETURN

# FIG. 6

```
                    ( START )
                        │
                        ▼              S30
                ┌──────────────┐
                │ INITIAL  SET │
                └──────────────┘
                        │
                        ▼◄──────────────────────────┐
S31                  ╱────────╲            NO        │
               ╱   DATA          ╲──────────────────►│
               ╲ PRESENT IN INPUT BUFFER             │
                   ╲    ?    ╱                        │
                     ╲────╱                           │
                       │ YES                          │
                       ▼                              │
        NO          ╱────────╲                        │
     ┌──────────╱   SERIAL      ╲         S32         │
     │          ╲ MODE SETTING COMMAND                │
     │              ╲    ?    ╱                        │
     │                ╲────╱                           │
     ▼                  │ YES            S33           │
┌─────────────┐         ▼                              │
│ S40         │  ┌──────────────────────┐             │
│COMMAND ANALYSIS,│ RENDER SLCT SIGNAL AT│            │
│FUNCTION PROCESS-│ L LEVEL AND BUSY SIGNAL           │
│ING, PRINTING │  │ AT H LEVEL           │            │
│PROCESSING, ETC.│ └──────────────────────┘           │
└─────────────┘         │                             │
     │         ┌ S34     ▼◄────────────────────────┐  │
     │     ┌──────────────────────────┐            │  │
     │     │ READ 1-BIT DATA OUT OF STATUS          │  │
     │     │ DATA TABLE AND SET THE 1-BIT           │  │
     │     │ DATA IN SLCT TERMINAL    │            │  │
     │     └──────────────────────────┘            │  │
     │  S35     │                                  │  │
     │     ┌──────────────────────────┐            │  │
     │     │ RENDER ACK SIGNAL AT L LEVEL           │  │
     │     └──────────────────────────┘   S38      │  │
     │  S36     │                     ┌──────────┐  │  │
     │     ┌──────────────────────────┐│ UPDATE READING
     │     │ RENDER ACK SIGNAL AT H LEVEL│ BIT    │──┘  │
     │     └──────────────────────────┘└──────────┘     │
     │          │                          ▲            │
     │  S37   ╱────────╲         NO         │            │
     │    ╱   OUTPUT      ╲───────────────────┘          │
     │    ╲ DATA ENDED ?  ╱                              │
     │      ╲────╱                                       │
     │        │ YES            S39                        │
     │        ▼                                           │
     │  ┌──────────────────────────┐                     │
     │  │ RENDER BUSY SIGNAL AT L LEVEL                   │
     │  │ AND SLCT SIGNAL AT H LEVEL│                     │
     │  └──────────────────────────┘                     │
     │          │                                         │
     └──────────┼─────────────────────────────────────────┘
                ▼
            ( RETURN )
```

## FIG. 7

BUSY

$\overline{ACK}$

SLCT
(PE, $\overline{FAULT}$)

# FIG. 8

EP 0 298 724 A2